# EUROPÄISCHE PATENTSCHRIFT

(11) **EP 2 049 874 B1**
(45) Veröffentlichungstag und Bekanntmachung des Hinweises auf die Patenterteilung: **17.11.2010**
(21) Anmeldenummer: 07788123.3
(22) Anmeldetag: 01.08.2007
(51) Int. Cl.: G01D 5/14, G01P 3/487, G01P 3/489

(54) **SENSORANORDNUNG ZUR PRÄZISEN ERFASSUNG VON RELATIVBEWEGUNGEN ZWISCHEN EINEM ENCODER UND EINEM SENSOR**
SENSOR ARRANGEMENT FOR THE PRECISE DETECTION OF RELATIVE MOVEMENTS BETWEEN AN ENCODER AND A SENSOR
AGENCEMENT DE CAPTEUR POUR UNE DETECTION PRECISE DE MOUVEMENTS RELATIFS ENTRE UN ENCODEUR ET UN CAPTEUR

(30) Priorität: 01.08.2006 DE 102006036196; 01.08.2007 DE 102007036463
(43) Veröffentlichungstag der Anmeldung: 22.04.2009
(73) Patentinhaber: Continental Teves AG & Co. oHG, 60488 Frankfurt (DE)
(72) Erfinder: LOHBERG, Peter, 61381 Friedrichsdorf (DE); RINK, Klaus, 63517 Rodenbach (DE)
(74) Vertreter: Beck, Jörg
(86) Internationale Anmeldenummer: PCT/EP2007/057954
(87) Internationale Veröffentlichungsnummer: WO 2008/015229

(56) Entgegenhaltungen:
- DE-A1- 2 753 738
- JP-A- 2004 333 436
- US-A1- 2004 100 251

## Beschreibung

Die Erfindung betrifft eine Sensoranordnung gemäß Oberbegriff von Anspruch 1, ein Verfahren zur präzisen Erfassung von Relativbewegungen zwischen einem Encoder und einem Sensor gemäß Oberbegriff von Anspruch 11 sowie die Verwendung der Sensoranordnung als Raddrehzahlerfassungssystem in Kraftfahrzeugen.

Druckschrift US 2006/0069523 A1 schlägt eine Drehzahlsensoranordnung bestehend aus einem inkrementellen Encoder und einem Sensor vor, wobei der Sensor zwei Magnetfeldsensorelemente aufweist, welche in Bewegungsrichtung des Encoders zueinander versetzt angeordnet sind. Die Magnetfeldsensorelement-Ausgangssignale, welche bezüglich des Erfassens einer Maßstabsteilung um eine Zeitdifferenz relativ zueinander verschoben sind, werden an eine elektronische Kontrolleinheit übertragen, in welcher aus dieser Zeitdifferenz die Drehzahl bzw. Rotationsgeschwindigkeit des Encoders berechnet wird. Dies ist insofern nachteilig, als dass die Magnetfeldsensorelement-Ausgangssignale ohne eine Signalaufbereitung bzw. Signalverarbeitung an die elektronische Kontrolleinheit übertragen werden, wodurch zwei separate Ausgangssignale übertragen werden müssen, die außerdem jeweils einer relativ hohen Störanfälligkeit unterliegen.

DE2753738, JP 2004333436 und US 2004100251 zeigen weitere Drehzahlsensoranordnungen bestehend aus einem Encoder und zwei magnetfieldsensorelementen.

Die Erfindung hat sich die Aufgabe gestellt eine Sensoranordnung mit einem verbesserten Ausgangssignal vorzuschlagen, welches insbesondere relativ robust gegenüber Störeinflüssen ist.

Die Aufgabe wird erfindungsgemäß gelöst durch die Sensoranordnung gemäß Anspruch 1 und das Verfahren gemäß Anspruch 11.

Der Erfindung liegt der Gedanke zu Grunde, dass der Sensor eine Signalverarbeitungsschaltung umfasst, in welcher ein gemeinsames Geschwindigkeitssignal bzw. Geschwindigkeitssignalmuster aus den mindestens zwei Magnetfeldsensorelement-Ausgangssignalen erzeugt wird, insbesondere mittels eines Schnittstellenmoduls.

Die Bewegungserfassung mittels der mindestens zwei in Bewegungsrichtung versetzt angeordneten Magnetfeldsensorelemente und der daraus resultierenden relativgeschwindigkeitsabhängigen Zeitdifferenz der Magnetfeldsensorelement-Ausgangssignale ermöglicht eine relativ präzise Geschwindigkeitserfassung, welche im Wesentlichen unabhängig ist von Maßstabsteilungsfehlern des Encoders. Aus diesem Grund ist die Verwendung von relativ kostengünstigen Encodern mit einem durchschnittlich relativ großen Maßstabsteilungsfehler möglich, deren Fertigungspräzision sonst nicht ausreichen würde.

Unter einem Encoder mit inkrementellem Maßstab wird bevorzugt sowohl ein Encoder mit einem magnetischen Maßstab umfassend eine, insbesondere ganzzahlige, Folge alternierender, permanent magnetisierter Nord-/Südpolareale als auch ein, ein magnetisches Feld beeinflussendes, insbesondere ferromagnetisches, Mittel in Kombination mit einem Magneten verstanden, wie beispielsweise ein Zahnrad, eine Zahnstange oder eine entsprechende Lochscheibe. Der Encoder dient besonders bevorzugt als Impulsgeber innerhalb der Sensoranordnung.

Der Maßstab des Encoders ist vorzugsweise alternativ zur Erfassung von rotatorischen oder translatorischen Relativbewegungen zwischen Encoder und Sensor ausgebildet, wobei der Maßstab insbesondere kreisförmig oder gerade ausgebildet ist.

Unter einer Relativbewegung zwischen Encoder und Sensor wird zweckmäßigerweise eine Bewegung des Encoders relativ zu einem fest positionierten Sensor verstanden. Es kann alternativ vorzugsweise darunter allerdings auch eine Bewegung des Sensors relativ zu einem ortsfesten Encoder oder eine Kombinationsbewegung verstanden werden.

Unter einer Maßstabsteilung wird bevorzugt eine Teilungsperiode bzw. Einzelteilung bzw. Polteilung des Maßstabs, beispielsweise bestehend aus einem Nord-Südpolpaar oder einem Zahn-Lückenpaar verstanden. Dabei wird unter einem definierten Anteil einer Maßstabsteilung insbesondere eine einzelne Nord- oder Südpolzone oder ein einzelner Zahn oder eine einzelne Lücke verstanden. Besonders bevorzugt wird eine solche Maßstabsteilung unter Berücksichtigung des magnetischen Feldes, welches diese umgibt, in weitere, feinere Anteile zerlegt, welche ganz besonders bevorzugt durch Interpolation der Magnetfeldsensorelement-Ausgangssignale, beispielsweise hinsichtlich des erfassten Winkels oder der erfassten Feldstärke des magnetischen Feldes, erfasst und den Sensorsignalanteilen zugeordnet werden.

Unter einem Magnetfeldsensorelement wird bevorzugt ein magnetoelektrisches Wandlerelement, wie ein AMR-Element, ein GMR-Element, ein anderes magnetoresistives Sensorelement oder ein Hallelement, verstanden.

Die Magnetfeldsensorelemente werden vorzugsweise als Feldsonden im Schwachfeldbetrieb eingesetzt und sind bezüglich des Encoders entsprechend angeordnet. Dies hat den Vorteil, dass der Luftspalt nicht sehr gering gehalten werden muss, wie dieses beispielsweise für einen Starkfeldbetrieb nötig ist.

Der Maßstab des Encoders ist zweckmäßigerweise bezüglich der Maßstabsteilungen mit einem Muster versehen, durch welches die Positionen der einzelnen Maßstabsteilungen oder Gruppen von Maßstabsteilungen codiert sind. Dieses Muster ist insbesondere in einer elektronischen Kontrolleinheit gespeichert.

Unter einem Maßstabsteilungsfehler eines Encoders werden bevorzugt die Toleranzen des inkrementellen Maßstabs verstanden, welche sich beispielsweise in Unregelmäßigkeiten der Maßstabsteilungslängen äußern. Der Begriff Maßstabsteilungsfehler entspricht insbesondere den Begriffen Polteilungsfehler, Einzelteilungsfehler und Teilungseinzelabweichung.

Unter einem Abbildungsfehler wird vorzugsweise ein vom Sensor erfasster Encoder- bzw. Maßstabsteilungs-Abbildungsfehler verstanden, welcher sich hinsichtlich der Erfassung von Encoderbewegungen bzw. Relativbewegungen zwischen Encoder und Sensor durch einen mit dem Encoder magnetisch gekoppelten Sensor über einen Luftspalt bestimmter Länge ergibt. Dabei erscheinen die Maßstabsteilungen des Encoders in Abhängigkeit der Luftspaltlänge für den Sensor als unscharf. Die Unschärfe äußert sich besonders bevorzugt in einem Rauschen, mit welchem die Magnetfeldsensorelement-Ausgangssignale bezüglich des Erfassens von Maßstabsteilungen oder definierten Anteilen von diesen behaftet sind.

Das Sensorausgangssignal bzw. das Geschwindigkeitssignal ist auf Grund des inkrementell ausgebildeten Maßstabs bevorzugt im Wesentlichen periodisch.

Das Sensorausgangssignal und das Geschwindigkeitssignal sind bevorzugt ein und dasselbe Signal. Alternativ vorzugsweise umfasst das Geschwindigkeitssignal zumindest den ersten und den zweiten, nacheilenden Zählimpuls, welche in Abhängigkeit der relativgeschwindigkeitsabhängigen Zeitdifferenz zueinander vorschoben sind, oder den einzelnen Zählimpuls, dessen Dauer von der relativgeschwindigkeitsabhängigen Zeitdifferenz abhängig ist, wobei dieses Geschwindigkeitssignal Teil des Sensorausgangssignals ist.

Die Relativgeschwindigkeit zwischen Encoder und Sensor bzw. die entsprechende Relativgeschwindigkeitsinformation ist vorzugsweise durch das Geschwindigkeitssignal bzw. das Geschwindigkeitssignalmuster codiert. Je nach Ausbildung und Verwendung der Sensoranordnung ist diese Relativgeschwindigkeit eine translatorische Geschwindigkeit oder eine rotatorische Geschwindigkeit, wie beispielsweise eine Winkelgeschwindigkeit oder eine Drehzahl. Im Fall der Erfassung einer rotatorischen Geschwindigkeit und einer entsprechenden Auslegung der Sensoranordnung sind den Maßstabsteilungen bzw. Winkelteilungen insbesondere Winkelpositionen bzw. Drehwinkeln zugeordnet.

Es ist bevorzugt, dass der inkrementelle Maßstab des Encoders zumindest eine Maßstabsteilung mit definierter Länge zur Codierung einer Positionsinformation aufweist, wobei sich diese definierte Länge von der Länge anderer Maßstabsteilungen des Encoders unterscheidet. Solch eine besondere Maßstabsteilung definierter Länge kann beispielsweise als Referenzposition des Encodermaßstabs dienen.

Die Sensoranordnung ist vorzugsweise über zumindest zwei Leitungen mit einer elektronischen Kontrolleinheit verbunden und wird insbesondere über diese beiden Leitungen mit Energie versorgt. Der Sensor ist dem entsprechend als aktiver Sensor ausgebildet.

Die Längen der Maßstabsteilungen sind zweckmäßigerweise ortsabhängig unterschiedlich, insbesondere eindeutig unterschiedlich, entlang der Bewegungsrichtung des Encoders ausgebildet. Hierdurch sind die Positionen der einzelnen Maßstabsteilungen über ihre jeweilige Länge, insbesondere eindeutig, codiert. Besonders bevorzugt weisen mehrere Maßstabsteilungen, ganz besonders bevorzugt mehrere Gruppen von Maßstabsteilungen, im Wesentlichen die gleiche Länge auf. Alternativ besonders bevorzugt sind die Längen der Maßstabsteilungen im Wesentlichen entsprechend einer stetigen Funktion, ganz besonders bevorzugt entsprechend einer trigonometrischen Funktion, entlang der Relativbewegungsrichtung bzw. entlang des Maßstabsverlaufs ausgebildet. Durch obige Ausbildungen des Encoder-Maßstabs können vorteilhafte Positionscodierungen realisiert werden.

Es ist bevorzugt, dass die Signalverarbeitungsschaltung der Sensoranordnung eine Signalaufbereitungseinheit umfasst, welche aus den Magnetfeldsensorelement-Ausgangssignalen zumindest jeweils ein Bewegungssignal erzeugt und insbesondere zumindest eine der folgenden Zusatzinformationen aus mindestens einem der Magnetfeldsensorelement-Ausgangssignale generiert und zur weiteren Verarbeitung bereitstellt:
- eine Bewegungsrichtungsinformation,
- eine Information über die magnetische Feldstärke im Luftspalt, welche beispielsweise eine Positionsinformation umfasst und/oder
- einen Eigendiagnoseparameter, wie beispielsweise eine Information bezüglich des Auftretens einer als "Flippen" bezeichneten Störung.

Die Bewegungssignale sind insbesondere bezüglich der Magnetfeldsensorelement-Ausgangssignale aufbereitet und/oder verstärkt und umfassen nach der Signalaufbereitung besonders bevorzugt jeweils einen Impuls definierter Amplitude und Pulsdauer, wobei die Impulse in den beiden Signalaufbereitungskanälen, welche jeweils einem Magnetfeldsensorelement zugeordnet sind, um die relativgeschwindigkeitsabhängige Zeitdifferenz gegeneinander verschoben sind.

Das Schnittstellenmodul umfasst zweckmäßigerweise einen Modulator und zumindest eine Stromquelle, wobei der Modulator wenigstens in Abhängigkeit der Bewegungssignale die mindestens eine Stromquelle ansteuert und das Sensorausgangssignal als im Wesentlichen periodisches, eingeprägtes Stromsignal erzeugt. Dieses weist pro Signalperiode zwei Zählimpulse auf, die insbesondere jeweils in einer Zählimpulseinheit aus den Bewegungssignalen erzeugt werden und deren zeitlicher Versatz bzw. deren Phasenverschiebung zueinander von aufsteigender Flanke des ersten Zählimpulses zu aufsteigender Flanke des zweiten Zählimpulses von der relativgeschwindigkeitsabhängigen Zeitdifferenz der Magnetfeldsensorelement-Ausgangssignale, insbesondere linear, abhängt und/oder dieser besonders bevorzugt entspricht. Obige Signalform ist eine vorteilhafte Form des Geschwindigkeitssignals des Sensorausgangssignals und ist in einer Auswerteeinheit bzw. elektronischen Kontrolleinheit relativ zuverlässig zu decodieren. Es hat sich außerdem herausgestellt, dass Signale in Form von eingeprägten Strömen besonders robust gegenüber Störungen sind. Besonders bevorzugt weist die Signalverarbeitungsschaltung eine Bewegungsrichtungseinheit auf, welche in Abhängigkeit der durch die Signalaufbereitungseinheit bereitgestellten Bewegungsrichtungsinformation den Modulator des Schnittstellenmoduls so ansteuert, dass unabhängig von der relativen Bewegungsrichtung bzw. der Bewegungsrichtung des Encoders und unabhängig von der dadurch erzeugten Reihenfolge der beiden Zählimpulse, ursprünglich generiert aus den Magnetfeldsensorelement-Ausgangssignalen, das in einer Zusatzinformationseinheit aus wenigstens einer Zusatzinformation erzeugte Zusatzinformationssignal stets in einem definierten zeitlichen Abstand dem zweiten, nacheilenden Zählimpuls folgt. Mit Hilfe der Bewegungsrichtungseinheit wird also der Modulator so angesteuert, dass unabhängig von der relativen Bewegungsrichtung, wobei entweder aus dem ersten oder dem zweiten Magnetfeldsensorelement-Ausgangssignal der erste Zählimpuls und entsprechend der zweite, nacheilende Zählimpuls erzeugt wird, stets dem zweiten, nacheilenden Zählimpuls das Zusatzinformationssignal folgt und nicht dem ersten Zählimpuls. Hierdurch wird vermieden, dass das Zusatzinformationssignal dem ersten Zählimpuls folgt und möglicherweise durch den nacheilenden, zweiten Zählimpuls abgeschnitten wird. Der zeitlicher Abstand nach dem zweiten Zählimpuls bis zum Zählimpuls der darauf folgenden Signalperiode ist bzw. die Pulspause nach dem zweiten Zählimpuls ist nämlich ganz besonders bevorzugt deutlich länger als der zeitliche Abstand zwischen den beiden Zählimpulsen einer Signalperiode.

Mittels der Bewegungsrichtungseinheit können alternativ vorzugsweise etwaige Zusatzdaten gezielt dem voraus- oder nacheilenden Zählimpuls angehängt oder aufmoduliert werden.

Das Schnittstellenmodul umfasst alternativ vorzugsweise einen Modulator und zumindest eine Stromquelle, wobei der Modulator wenigstens in Abhängigkeit der Bewegungsinformation die mindestens eine Stromquelle ansteuert und das Sensorausgangssignal als im Wesentlichen periodisches, eingeprägtes Stromsignal erzeugt, welches pro Signalperiode einen einzelnen Zählimpuls aufweist, dessen Zeitdauer von der relativgeschwindigkeitsabhängigen Zeitdifferenz der Magnetfeldsensorelement-Ausgangssignale, insbesondere linear, abhängt und/oder dieser besonders bevorzugt entspricht. Diese Form des Sensorausgangssignals bzw. des Geschwindigkeitssignals ist besonders robust und kann in einfacher und zuverlässiger Weise in einer Auswerteeinheit bzw. elektronischer Kontrolleinheit decodiert werden.

Es ist zweckmäßig, dass der Sensor einen Zusatzeingang zum Empfang von Zusatzsignalen, wie beispielsweise einem Belagsverschleißsignal, aufweist. Hierdurch können Signale weiterer Sensoren mittels des Schnittstellenmoduls an die elektronische Kontrolleinheit übertragen werden, wobei dies in einem gemeinsamen Datenprotokoll möglich ist und keine zusätzlichen Leitungen zur elektronischen Kontrolleinheit notwendig macht.

Verzugsweise umfasst die Signalverarbeitungsschaltung eine Zusatzsatzinformationseinheit, in welcher aus den von der Signalaufbereitungseinheit bereitgestellten Zusatzinformationen und/oder aus den Zusatzinformationen des Zusatzeingangs ein Zusatzinformationssignal erzeugt wird. Die Zusatzinformationen liegen insbesondere als binäre Daten vor und das Zusatzinformationssignal hat besonders bevorzugt eine Form von aneinander gereihten Impulsen bzw. Impulspausen definierter Zeitdauer und definierter Amplitude, welche/r jeweils ein Informationsbit der Zusatzinformationen codiert.

Die Impulse bzw. Zusatzinformationsimpulse des Zusatzinformationssignals weisen ganz besonders bevorzugt eine Manchester-Codierung auf.

Das Schnittstellenmodul erzeugt das Sensorausgangssignal bevorzugt zusätzlich in Abhängigkeit der jeweiligen Maßstabsteilungslänge, wobei die Signalperiode ein Maß für die jeweilig erfasste Encoderposition bzw. Relativposition ist. Hierdurch wird eine gleichzeitige Übertragung eines Positionssignals in robuster und zuverlässiger Weise ermöglicht. Insbesondere ergibt sich die Signalperiode automatisch aus der Maßstabsteilungslänge und benötigt keine zusätzliche Signalbeeinflussung oder Signalverarbeitung um dieses zu erreichen.

Das Schnittstellenmodul erzeugt das Sensorausgangssignal zweckmäßigerweise zusätzlich in Abhängigkeit zumindest einer Zusatzinformation und/oder des Zusatzinformationssignals. Dabei werden pro Signalperiode in der Pulspause zwischen dem einzelnen Zählimpuls und dem einzelnen Zählimpuls der darauf folgenden Signalperiode oder in der Pulspause zwischen dem zweiten Zählimpuls und dem ersten Zählimpuls der darauf folgenden Signalperiode zu definierten Zeitpunkten Zusatzinformationsimpulse definierter Zeitdauer oder Zusatzinformationsimpulspausen definierter Zeitdauer in Abhängigkeit des binären Wertes der Zusatzinformation erzeugt. Dabei unterscheidet sich die Amplitude der Zusatzinformationsimpulse insbesondere von der Amplitude der Zählimpulse.

Die wenigstens zwei Magnetfeldsensorelemente sind bevorzugt Anisotrop-Magneto-Resistive-Sensorelemente und der Sensor weist zusätzlich mindestens einen Biasmagneten auf, wobei in Bezug auf ein räumliches bzw. dreiachsiges, kartesisches Koordinatensystem der Encoder bezüglich seiner durch den Sensor erfassten Maßstabsfläche bzw. -oberfläche im Wesentlichen parallel zur x-y-Ebene, der Biasmagnet bezüglich seiner Magnetisierungsrichtung im Wesentlichen parallel zur x-Achse und die Magnetfeldsensorelemente bezüglich ihrer jeweiligen Sensorfläche im Wesentlichen parallel zur x-y-Ebene angeordnet sind, wobei die Magnetfeldsensorelemente mit einer in z-Richtung unterschiedlichen Beabstandung zur Maßstabsoberfläche angeordnet sind. Hierdurch kann eine als "Flippen" bezeichnete Störung eines der Magnetfeldsensorelemente erkannt werden, welche zu einer Verdopplung des Magnetfeldsensorelement-Ausgangssignals des gestörten Elements führen würde. Dies wird insbesondere dadurch erkannt, indem die Frequenzen der beiden Magnetfeldsensorelement-Ausgangssignale durch die Signalverarbeitungsschaltung verglichen werden. Im Fall einer erkannten, unterschiedlichen Frequenz liegt ein "Flippen" vor. Zu diesem Zweck weist die Signalverarbeitungsschaltung besonders bevorzugt geeignete Schaltungsmittel auf, wie sie beispielsweise in Druckschrift WO 2006/122945 A1 vorgeschlagen werden.

Es ist zweckmäßig, dass im Rahmen des Verfahrens das Sensorausgangssignal in Form eines eingeprägten Stromsignals an eine elektronische Kontrolleinheit übertragen wird, mit welcher der Sensor über zumindest zwei Leitungen verbunden ist. Der Sensor wird dabei besonders bevorzugt über diese beiden Leitungen mit elektrischer Energie versorgt.

Vorzugsweise wird das Verfahren ergänzt, wobei das Geschwindigkeitssignalmuster für jeweils eine Signalperiode gebildet wird, indem beim bezüglich der relativgeschwindigkeitsabhängigen Zeitdifferenz direkt aufeinander folgenden Über- und Unterschreiten einer ersten und einer zweiten definierten Amplitudenschwelle durch jeweils eines der Magnetfeldsensorelement-Ausgangssignale ein erster und ein nacheilender, zweiter Zählimpuls jeweils mit definierter Amplitude, insbesondere mit einer definierten ersten Amplitude, und mit einer definierten Dauer durch die Signalverarbeitungsschaltung erzeugt wird. Dabei ist der erste Zählimpuls dem einen Magnetfeldsensorelement-Ausgangssignal zugeordnet und der zweite, nacheilende Zählimpuls ist dem anderen Magnetfeldsensorelement-Ausgangssignal zugeordnet.

Alternativ vorzugsweise wird die Erzeugung des Geschwindigkeitssignalmusters für jeweils eine Signalperiode durchgeführt, indem beim bezüglich der relativgeschwindigkeitsabhängigen Zeitdifferenz direkt aufeinander folgenden Über- und Unterschreiten einer ersten und einer zweiten definierten Amplitudenschwelle durch jeweils eines der Magnetfeldsensorelement-Ausgangssignale ein einzelner Zählimpuls einer definierten ersten Amplitude und mit der Dauer des Zeitintervalls, begrenzt durch dieses Unter- und Überschreiten der beiden definierten Amplitudenschwellen, durch die Signalverarbeitungsschaltung erzeugt wird.

Es ist bevorzugt, dass in der Signalverarbeitungsschaltung aus zumindest einem der Magnetfeldsensorelement-Ausgangssignale Zusatzinformationen bzw. mindestens eine Zusatzinformation, wie beispielsweise eine Bewegungsrichtungsinformation, eine Information über die magnetische Feldstärke im Luftspalt und/oder ein Eigendiagnoseparameter, wie beispielsweise das Auftreten einer als "Flippen" bezeichneten Störung, gewonnen werden. Diese werden, insbesondere jeweils, als wenigstens ein Zusatzinformationsbit codiert, wobei jeweils einmal pro Signalperiode diese Zusatzinformationsbits in einer Pulspause nach dem nacheilenden, zweiten oder dem einzelnen Zählimpuls in Form von aufeinanderfolgenden Zusatzinformationsimpulsen mit einer definierten zweiten Amplitude und einer definierten Zeitdauer oder in Form von entsprechenden Zusatzinformationsimpulspausen codiert werden.

In der elektronischen Kontrolleinheit wird zweckmäßigerweise jeweils pro Signalperiode des Sensorausgangssignals aus dem zeitlichen Versatz zwischen dem ersten und dem nacheilenden, zweiten Zählimpuls oder aus der Zeitdauer des einzelnen Zählimpulses die Relativgeschwindigkeit zwischen Encoder und Sensor berechnet. Zusätzlich wird in der elektronischen Kontrolleinheit insbesondere aus der jeweiligen Periodendauer des Sensorausgangssignals die entsprechende bzw. dieser Periode zuzuordnende Maßstabsteilung oder das entsprechende Maßstabsteilungssegment des Encoders erkannt und insbesondere eine Positionsinformation erzeugt. Besonders bevorzugt ist dieser Positionsinformation ein Weg- oder Winkelwert zugeordnet.

Der Sensor erfasst vorzugsweise die, insbesondere mittlere, magnetische Feldstärke im Luftspalt und überträgt diese, insbesondere als Zusatzinformation, an die elektronische Kontrolleinheit, in welcher danach der Abbildungsfehler der Maßstabsteilung, mit dem das Sensorausgangssignal hinsichtlich einer Periode jeweils behaftet ist, aus der mittleren Magnetfeldstärke im Luftspalt und der Auswertung einer Referenzkennlinie, welche elektronisch gespeichert ist und den Zusammenhang zwischen normierter Luftspaltlänge und Abbildungsfehler und normierter Feldstärke angibt, ermittelt wird, wonach insbesondere die jeweilige Periodendauer des Sensorausgangssignals zur Erzeugung bzw. Berechnung einer Positionsinformation unter Berücksichtigung des Abbildungsfehlers ausgewertet wird. Besonders bevorzugt wird ein Verfahren zur Bestimmung des Abbildungsfehlers im magnetischen Luftspalt eines Raddrehzahlerfassungssystems durchgeführt, wie es in Druckschrift WO 2007/057429 A1 vorgeschlagen wird, insbesondere in Form einer der dort beschriebenen Weiterbildungen.

Zweckmäßigerweise wird eine Positionsinformation aus der Periodendauer des Sensorausgangssignals und der magnetischen Feldstärke gemeinsam oder ergänzend ermittelt, wobei die, insbesondere mittlere, magnetische Feldstärke ein Maß für die Maßstabsteilungslänge ist. Hierdurch kann eine Mittelwertbildung und/oder Plausibilisierung im Zuge einer Ermittlung der Maßstabsteilungslänge bzw. der sich daraus ergebenden Positionsinformation durchgeführt werden.

Die Sensoranordnung ist bevorzugt als Raddrehzahlerfassungssystem ausgebildet, wobei in der elektronischen Kontrolleinheit ein Verfahren zur indirekten Reifendruckverlusterkennung durchgeführt wird, welches auf das Sensorausgangssignal zurückgreift. Hierdurch kann aufgrund des besonders präzisen Geschwindigkeitssignals die Zuverlässigkeit und Genauigkeit eines Verfahrens zur indirekten Reifendruckverlusterkennung gesteigert werden.

Die Magnetfeldsensorelemente und/oder die Signalverarbeitungsschaltung sind vorzugsweise auf einem gemeinsamen Chip angeordnet.

Es ist zweckmäßig, dass die erfindungsgemäße Sensoranordnung und das erfindungsgemäße Verfahren zur Verdopplung der Ortsabtastrate bzw. zu Verdopplung der Signalperiode bezogen auf die erfassten Maßstabsteilungen genutzt wird.

Vorzugsweise wird in der Sensoranordnung oder im Zuge der Durchführung des Verfahrens ein Encoder verwendet, welcher gegenüber einem für die jeweilige Applikation üblichen Encoder, eine verringerte, insbesondere im Wesentlichen halbierte, Anzahl an Maßstabsteilungen aufweist. Dies ist zweckmäßig, da erfindungsgemäß eine besonders präzise Geschwindigkeitsinformation bereitgestellt wird, weshalb eine Geschwindigkeitsermittlung durch Auswertung mehrerer Signalperioden nicht unbedingt nötig ist. Die Verwendung eines obig beschriebenen Encoders hat die Vorteile einer höheren bzw. verdoppelten Magnetfeldstärke und einer deutlichen Verminderung des Signaljitters. Zusätzlich führt dies zu einer Verlängerung bzw. Verdopplung der Periodendauer des Sensorausgangssignals, wodurch im Fall einer Verwendung als Raddrehzahlerfassungssystem in einem Kraftfahrzeug auch bei relativ hohen Geschwindigkeiten eine vollständige Übertragung der Zusatzinformationen gewährleistet bleibt, ohne dass der erste oder einzelne Zählimpuls der jeweilig nachfolgenden Periode die Zusatzinformationsimpulse "abschneidet" bzw. diese überlagert.

Es ist bevorzugt, dass jede zweite Periode des Sensorausgangssignals sensorseitig unterdrückt wird, wodurch ebenfalls eine im Wesentlichen verdoppelte Pulspausendauer zur Übertragung der Zusatzinformationen verfügbar ist und dass somit obig beschriebenes "Abschneiden" der Zusatzinformationsimpulse durch den folgenden Zählimpuls zuverlässig vermieden wird.

Die Erfindung bezieht sich auch auf die Verwendung der Sensoranordnung in Kraftfahrzeugen und dabei auf eine Verwendung insbesondere als Raddrehzahlerfassungssystem, Sensoranordnung zur Drehzahlerfassung in einem Getriebe oder Motor oder zur Messung von lateralen Geschwindigkeiten, wie beispielsweise in einer Betätigungseinheit oder in einem Stoßdämpfer.

Die erfindungsgemäße Sensoranordnung und das Verfahren sind zur Verwendung in allen technischen Bereichen vorgesehen, in denen rotatorische oder translatorische Bewegungen erfasst werden sollen und insbesondere gleichzeitig eine relative Position zwischen Encoder und Sensor erfasst werden soll. Dabei ist die erfindungsgemäße Sensoranordnung und das Verfahren besonders bevorzugt geeignet zum Einsatz von besonders kostengünstigen Encodern mit durchschnittlich relativ großen Maßstabsteilungsfehlern. Insbesondere sind die erfindungsgemäße Sensoranordnung und das Verfahren aufgrund ihrer Präzision, Robustheit und Zuverlässigkeit für eine Verwendung in sicherheitskritischen Einsatzbereichen und für sicherheitskritische Applikationen, besonders bevorzugt für die Verwendung in Kraftfahrzeugen, ganz besonders bevorzugt in Kraftfahrzeugbrems- und regelungssystemen, vorgesehen.

Weitere bevorzugte Ausführungsformen ergeben sich aus den abhängigen Ansprüchen und den nachfolgenden Beschreibungen von Ausführungsbeispielen an Hand von Figuren.

Es zeigen in schematischer Darstellung
- Fig. 1: zwei Sensoranordnungsbeispiele, welche als Raddrehzahlerfassungssysteme gemäß dem Stand der Technik ausgebildet sind,
- Fig. 2: ein Ausführungsbeispiel einer Sensoranordnung als Raddrehzahlerfassungssystem,
- Fig. 3: die beispielhafte Erzeugung eines Sensorausgangssignals sowie dessen Signalmuster,
- Fig. 4: einen beispielhaften Encodermaßstab mit Maßstabsteilungen unterschiedlicher Länge und ein entsprechend erzeugtes Sensorausgangsignal,
- Fig. 5: ein beispielgemäßes Sensorausgangssignal umfassend einzelne Zählimpulse und eine periodendauercodierte Positionsinformation,
- Fig. 6 -8: beispielhafte Positionscodierungen durch unterschiedlich lang ausgebildete Maßstabsteilungen,
- Fig. 9: zwei beispielhafte Ausbildungen von jeweils zwei Magnetfeldsensorelementen auf einem gemeinsamen Chip, und
- Fig. 10: ein Ausführungsbeispiel von zwei gegenüber dem Maßstab des Encoders mit unterschiedlichem Abstand angeordneten Magnetfeldsensorelementen.

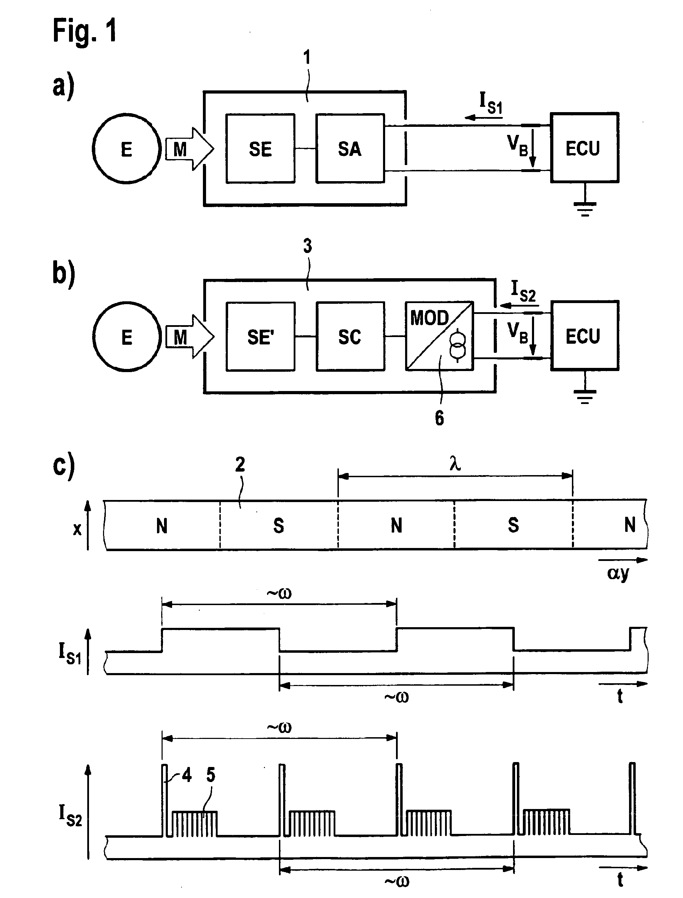

Fig. 1 veranschaulicht zwei beispielhafte, bekannte Raddrehzahlerfassungssysteme einschließlich deren wesentliche Komponenten und Signale. Dabei zeigt Fig. 1 a) einen aktiven Sensor 1, der über einen magnetischen Luftspalt M mit einem alternierend magnetisierten Encoder E gekoppelt ist und außerdem über zwei Leitungen mit einer elektronischen Kontrolleinheit ECU eines Kraftfahrzeugregelungssystems verbunden ist. Die ECU versorgt aktiven Sensor 1 mit elektrischer Energie mittels der Betriebsspannung VB. Encoder E ist fest mit einem Rad eines Kraftfahrzeugs verbunden. Sensorelement SE erfasst das durch Encoder E modulierte Magnetfeld und in Signalauswertestufe SA wird das Sensorelementausgangssignal aufbereitet und Sensorausgangssignal I_{S1} als im Wesentlichen periodisches Stromsignal erzeugt, in dessen Signalverlauf die Encoderbewegungen bzw. die erfassten Maßstabsteilungen des Encoders abgebildet sind. In Fig. 1 b) ist ein weitergebildetes Ausführungsbeispiel abgebildet, welches Sensor 3 aufweist, der ebenfalls eine Signalauswertestufe SC umfasst. Diese steuert einen Modulator MOD an, welcher mittels einer Stromquelle 6 ein in Fig. 1 c) dargestelltes Sensorausgangssignal I_{S2} in Form eines eingeprägten Stroms erzeugt, der das abgebildete Signalmuster aufweist. Dieses Signalmuster weist Zählimpulse 4 auf, welche das Erfassen der einzelnen Pole der alternierend magnetisierten Encoderspur 2 abbilden und jeweils zu den Zeitpunkten der steigenden und fallenden Flanken eines des von Signalauswertestufe SC erzeugten Signals erzeugt werden. Dieses entspricht im Wesentlichen dem Sensorausgangssignal I_{S1} der in Fig. 1 a) abgebildeten Sensoranordnung und umfasst jeweils pro Maßstabsteilung λ bzw. pro Nord-/Südpolpaar von Encoderspur 2 einen Impuls, aus dessen zeitlichem Versatz zum nachfolgenden Impuls die Raddrehzahl ω berechnet werden kann. Die Raddrehzahl bzw. die Bewegungsgeschwindigkeit Encoders E des Sensorausgangssignals I_{S2} wird aus obig beschriebenem Signalmuster aus der Dauer von zwei Signalperioden Sensorausgangssignals I_{S2} berechnet, welches außerdem noch Zusatzinformationen 5 in den Impulspausen überträgt.

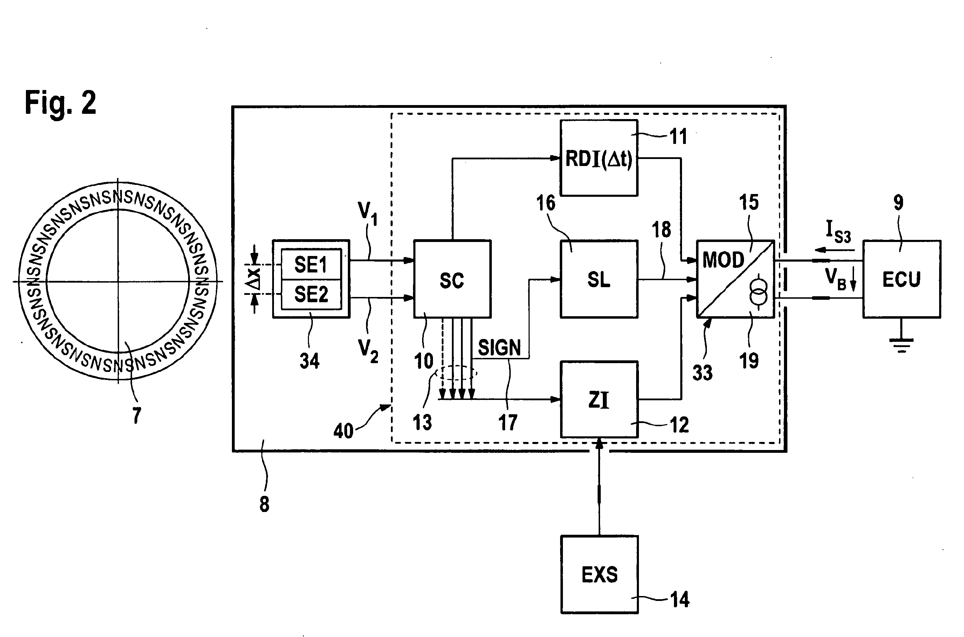

Fig. 2 zeigt ein Ausführungsbeispiel einer Sensoranordnung umfassend einen magnetischen Encoder 7, welcher fest mit einem Rad verbunden ist und einen im Wesentlichen kreisförmigen Maßstab mit Maßstabsteilungen aufweist, die als alternierende Nord-/Südpolpaare ausgebildet sind, einen Sensor 8 und eine elektronische Kontrolleinheit (ECU) 9 eines Kraftfahrzeugregelungssystems. Sensor 8 umfasst zwei Magnetfeldsensorelemente SE1 und SE2, welche beispielgemäß als Anisotrop-Magneto-Resistive-Sensorelemente ausgebildet sind, die in Bewegungsrichtung des Encoders 7 um einen definierten Abstand Δx zueinander versetzt angeordnet sind. Alternativ beispielhaft, kann dieser definierte Abstand auch ein Vielfaches der Maßstabsteilungslänge λ zuzüglich des Versatzes Δx sein, welcher geringer als λ ist, wobei dieses nicht dargestellt ist. Da der definierte Abstand Δx kleiner als λ ist, sind beispielgemäß Magnetfeldsensorelemente SE1 und SE2 in einem gemeinsamen Magnetfeldsensorelement-Modul 34 angeordnet. Die Ausgangssignale V₁, V₂ dieses Moduls 34 bzw. der Magnetfeldsensorelemente SE1, SE2 werden an Signalverarbeitungsschaltung 40 übertragen, durch welche das Sensorausgangssignal I_{S3} erzeugt wird. Sensor 8 ist beispielgemäß über zwei elektrische Leitungen mit ECU 9 verbunden und wird von ECU 9 über diese beiden Leitungen mit elektrischer Energie versorgt, veranschaulicht durch Versorgungsspannung V_{B}. Signalverarbeitungsschaltung 40 umfasst Signalaufbereitungseinheit 10, Zählimpulseinheit 11, Zusatzinformationseinheit 12, Bewegungsrichtungseinheit 16 und Schnittstellenmodul 33. Darüber hinaus weist Sensor 8 einen Zusatzeingang auf, über welchen eine externe Signalquelle (EXS) 14 eine Zusatzinformation bereitstellt, die an Zusatzinformationseinheit 12 übertragen wird. In Signalaufbereitungseinheit 10 wird aus den beiden Magnetfeldsensorelement-Ausgangssignalen jeweils ein Bewegungssignal erzeugt, welches einen Bewegungsimpuls definierter Amplitude pro erfasster Maßstabsteilung umfasst, dessen Dauer durch das Über- und Unterschreiten einer definierten Amplitudenschwelle des jeweiligen Magnetfeldsensorelement-Ausgangssignals festgelegt ist und damit jeweils von der Bewegungsgeschwindigkeit des Encoders 7 abhängt. Außerdem werden von Signalaufbereitungseinheit 10 Zusatzinformationen 13 aus den Magnetfeldsensorelement-Ausgangssignalen generiert. Dabei wird eine Bewegungsrichtungsinformation als Vorzeichensignal 17 an Bewegungsrichtungseinheit 16 übertragen. Die übrigen Zusatzinformationen 13 werden an Zusatzinformationseinheit 12 übertragen, welche aus den binären Zusatzinformationen aufeinanderfolgende Zusatzinformationsimpulse einer definierten zweiten Amplitude und Dauer erzeugt. Zählimpulseinheit 11 verarbeitet die beiden Bewegungssignale weiter, indem jeweils pro Signalperiode jedes Bewegungssignals ein Zählimpuls definierter erster Amplitude und definierter Dauer jeweils zum Zeitpunkt der steigenden Flanke und der fallenden Flanke des jeweiligen Bewegungssignals erzeugt wird. Die jeweilig bezüglich des Erfassens einer Maßstabsteilung oder eines Nord- oder Südpols zuzuordnenden beiden Zählimpulse der beiden Sensorelemente sind jeweils um eine Zeitdifferenz relativ zueinander verschoben, welche von der Bewegungsgeschwindigkeit Encoders 7 abhängig ist. Diese relativgeschwindigkeitsabhängige Zeitdifferenz ergibt sich aus dem definierten Abstand Δx der beiden Magnetfeldsensorelemente SE1 und SE2 und ist nicht von der jeweiligen Länge der Maßstabsteilungen abhängig. Der beispielgemäß verwendete Encoder weist zwar einen für Raddrehzahlerfassungssysteme üblichen, durchschnittlichen Maßstabsteilungsfehler von unter 2% auf. Dennoch sind die Sensorausgangssignale von Raddrehzahlerfassungssystemen normalerweise mit einem aus diesem Maßstabsteilungsfehler resultierenden Messfehler behaftet und entsprechend ist die berechnete Raddrehzahl fehlerhaft. Das in Schnittstellenmodul 33 erzeugte Sensorausgangssignal I_{S3} umfasst ein Geschwindigkeitssignal, welches eine Geschwindigkeitsinformation in Abhängigkeit dieser relativgeschwindigkeitsabhängigen Zeitdifferenz aufweist, weshalb diese Geschwindigkeitsinformation nicht mit dem aus obig erläutertem Maßstabsteilungsfehler resultierenden Fehler bzw. Messfehler behaftet ist. Schnittstellenmodul 33 umfasst einen Modulator 15 und eine Stromquelle 19, wobei Modulator 15 Stromquelle 19 in Abhängigkeit von den Ausgängen der Zählimpulseinheit 11, Zusatzinformationseinheit 12 und Bewegungsrichtungseinheit 16 ansteuert und Sensorausgangssignal I_{S3} in Form eines eingeprägten Stromsignals erzeugt, welches an elektronische Kontrolleinheit 9 übertragen wird. Beispielgemäß umfasst Sensorausgangssignal I_{S3} ein im Wesentlichen periodisches Signalmuster, dass pro Periode einen ersten und zweiten Zählimpuls definierter erster Amplitude und definierter Zeitdauer aufweist, wobei der erste und der zweite Zählimpuls alternierend aus jeweils einem Zählimpuls, erzeugt aus dem Bewegungssignal in Zählimpulseinheit 11, zugeordnet dem Ausgangssignal des ersten Magnetfeldsensorelements SE1, und einem Zählimpuls, erzeugt aus dem anderen Bewegungssignal, zugeordnet dem anderen Magnetfeldsensorelement-Ausgangssignal, resultieren. In Abhängigkeit eines Drehrichtungssignals 18 aus Bewegungsrichtungseinheit 16 folgt dem jeweils nacheilenden Zählimpuls in der jeweiligen Pulspause bis zum ersten Zählimpuls der folgenden Periode das Ausgangssignal der Zusatzinformationseinheit 12 in Form der obig beschriebenen Zusatzinformationsimpulse zweiter Amplitude. In der ECU wird jeweils pro Periode des Sensorausgangssignals I_{S3} aus der Zeitdifferenz bzw. der Phasenverschiebung Δt zwischen dem ersten und dem nacheilenden, zweiten Zählimpuls die nicht maßstabsteilungsfehlerbehaftete Drehgeschwindigkeit bzw. Drehzahl des Encoders berechnet. Außerdem wird aus der jeweiligen Periodendauer, welche von der jeweiligen Maßstabsteilungslänge abhängig ist, eine Positionsinformation bzw. die Drehwinkelinformation der jeweilig erfassten Maßstabsteilung, welcher ein konkreter Drehwinkel zugeordnet ist, berechnet.

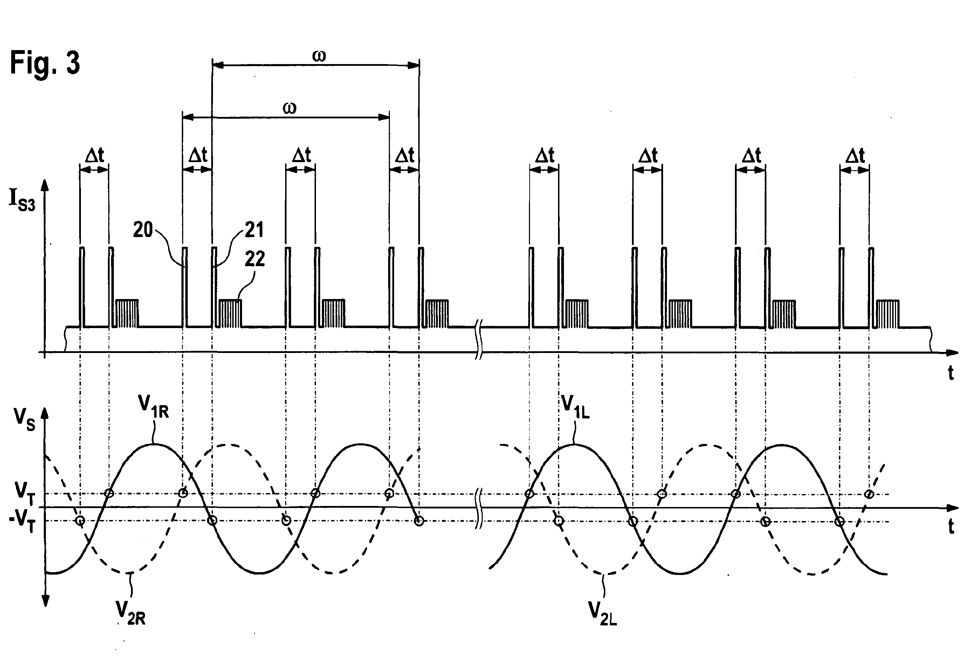

Fig. 3 veranschaulicht beispielhaft die Erzeugung des Sensorausgangssignals I_{S3} sowie dessen Signalmuster. Im unteren Teil der Figur ist die Funktion Vs(t) dargstellt, welche die Magnetfeldsensorelementausgangssignale V₁ und V₂ entsprechend einer Linksbewegung (Index L) und einer Rechtsbewegung (Index R) des Encoders umfasst. Bei Über- und Unterschreiten der Amplituden- bzw. Triggerschwellen V_{T} und -Vₜ wird jeweils in Abhängigkeit der Bewegungsrichtung des Encoders ein Zählimpuls 20, beispielsweise zugeordnet dem Signal V_{2R} und ein Zählimpuls 21, beispielsweise zugeordnet dem Signal V_{1R} durch die Signalverarbeitungsschaltung erzeugt. Es werden also beispielgemäß sowohl in Abhängigkeit von V1 als auch von V2 halbperiodisch beim abwechselnden Durchlaufen der oberen und unteren Triggerschwelle Zählimpulse 20 und 21 erzeugt, wobei zwischen zwei gleichen Flanken der Zählimpulse 20, 21 eine Zeitdifferenz Δt auftritt, die ein Maß für die Relativgeschwindigkeit bzw. Drehgeschwindigkeit eines Encoders ist. Eine weitere Besonderheit des beispielhaften Signalmusters des Sensorausgangssignals Is3 besteht darin, dass ein Zusatzinformationssignal 22, umfassen bit-kodierte Zusatzinformationen, immer nur mit Zählimpuls 21 kombiniert wird, der seinerseits dem Zählimpuls 20 stets nacheilt, obwohl je nach relativer Bewegungsrichtung bzw. Drehrichtung des Encoders entweder aus V1 oder aus V2 ein nacheilender Signalimpuls entsteht. Es ist daher beispielgemäß, wie in Fig. 2 veranschaulicht, Bewegungsrichtungseinheit 16 vorgesehen, die unter Verwendung der Bewegungsrichtungsinformation 17 den Modulator 15 so ansteuert, dass die Zusatzinformationen stets mit dem aus dem jeweils nacheilenden Kanal abgeleiteten Zählimpuls 21 kombiniert werden bzw. diesem folgend übertragen werden.

Aus dem abgebildeten Sensorausgangssignal bzw. dem Geschwindigkeitssignal kann mittels einer Auswertung der relativgeschwindigkeitsabhängigen Zeitdifferenz Δt die Relativgeschwindigkeit zwischen Encoder und Sensor berechnet werden. Aus dem Zusatzinformationssignal 22 bzw. den Zusatzsignalimpulsen werden in der ECU Zusatzinformationen gewonnen. Aus der Zeit ω, welche beispielgemäß einer doppelten Periodendauer entspricht, kann unter Berücksichtigung einer Maßstabsteilungsfehler-Kenngröße, die jeder Maßstabsteilung zugewiesen wird und aus einem jeweiligen Maßstabsteilungsfehler resultiert, die Positionsinformation der jeweilig erfassten Maßstabsteilung berechnet bzw. zugeordnet werden.

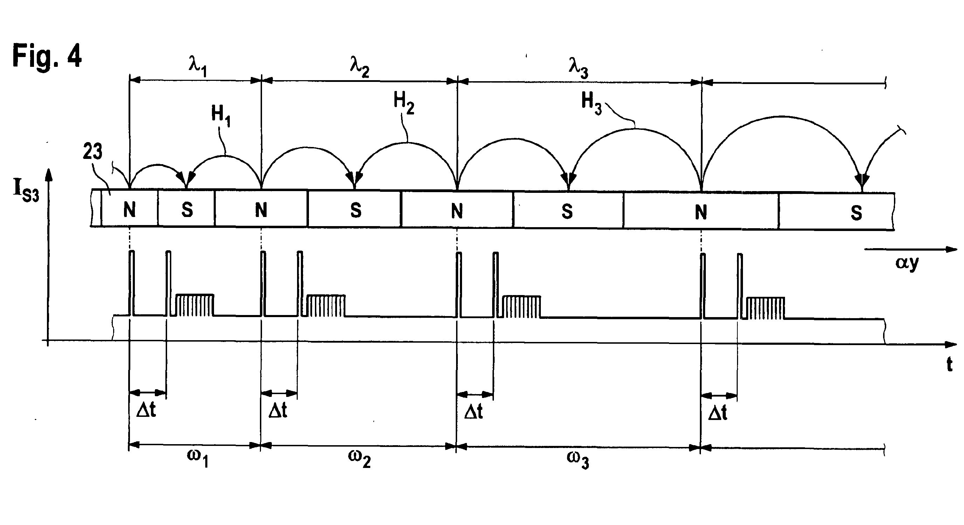

Fig. 4 zeigt einen beispielhaften Maßstab 23 eines Encoders, mit Maßstabsteilungen unterschiedlicher Länge λ₁, λ₂ durch welche Positionsinformationen codiert sind. Das Sensorausgangssignals I_{S3} ergibt sich beispielgemäß analog wie anhand der Fig. 3 beschrieben. Allerdings ergeben sich die jeweiligen Periodendauern ω₁, ω₂ sowohl entsprechend der unterschiedlichen Maßstabsteilungslängen λ₁, λ₂, als auch dadurch, dass jeweils eine Signalperiode, bzw. bezogen auf die Maßstabsteilung eine Halbperiode, sensorseitig unterdrückt wird bzw. nicht erzeugt wird.

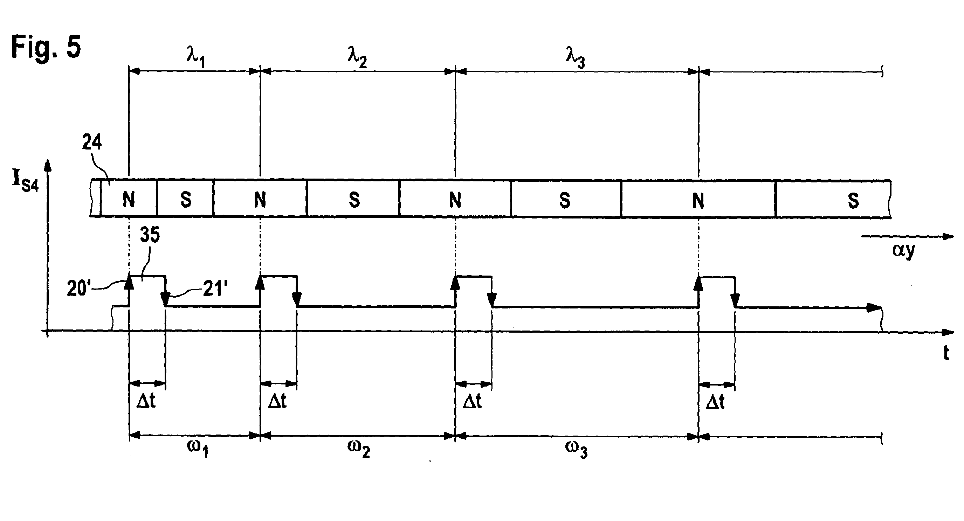

In Fig. 5 ist ebenfalls ein beispielhafter Maßstab 24 eines Encoders, mit Maßstabsteilungen unterschiedlicher Länge λ₁, λ₂ durch welche Positionsinformationen codiert sind, abgebildet. Aus den Sensorausgangssignalen wird beispielgemäß allerdings ein Sensorausgangssignal I_{S4} erzeugt, welches einen einzelnen Zählimpuls 35 aufweist, dessen steigende 20' und fallende Flanke 21' aus den Triggerschwellen gemäß Fig. 3 bestimmt werden. Dieses Signalmuster in unabhängig von der relativen Bewegungsrichtung. Die Dauer des einzelnen Zählimpulses 35 ist abhängig von der relativgeschwindigkeitsabhängigen Zeitdifferenz. Aus dieser Dauer des einzelnen Zählimpulses 35 wird in der ECU die Relativgeschwindigkeit berechnet und aus der Periodendauer wird eine Positionsinformation ermittelt.

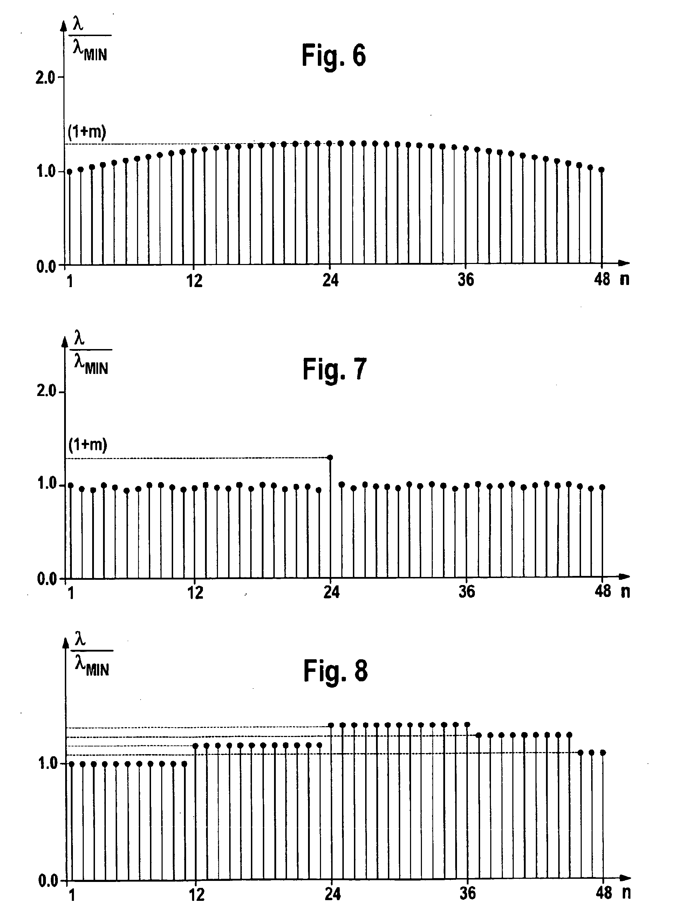

Die Fig. 6, 7 und 8 veranschaulichen an Hand von drei Beispielen unterschiedliche Positionscodierungen durch unterschiedlich lang ausgebildete Maßstabsteilungen. Dabei zeigt Fig. 6 eine Positionscodierung mittels der Maßstabsteilungslängen bzw. eine λ-Codierung bezüglich einer normierten Maßstabsteilungslänge gemäß der allgemeinen Funktion λ/λmin = f(n), wobei diese Funktion beispielgemäß als λ/λmin = 1 + m * sin(n * 3,75°), mit n = 1 bis 48 und m = 0,3, definiert ist. λmin definiert dabei die kürzeste Maßstabsteilung und n die Anzahl der Maßstabsteilungen. Weiterführend beispielgemäß beträgt λmin 3,5 mm. Dabei wird in der ECU eine Auswertung als Funktion der durchlaufenen Maßstabsteilungslängen λ / λmin in möglicher Kombination mit der Auswertung der durchlaufenen Polteilungsfeldstärken H/Hmin unter Berücksichtigung der Steigungen d(ω/ωmin)/dn bzw. d(H/Hmin)/dn sowie der Bewegungsrichtung des Encoders durchgeführt. In dem Beispiel von Fig. 7 weist der Maßstab des Encoders einen einzelnen Index bzw. eine Referenzpositionscodierung in Form einer langen Maßstabsteilung auf. Ausgehend von dieser Referenzposition werden beispielgemäß die übrigen Positionen bzw. Maßstabsteilungen des Encoders inkrementell ermittelt. Mittels einer Tabelle kann in vorteilhafter Weise ausgehend von dieser Referenzposition den übrigen Maßstabsteilungen eine Maßstabsteilungsfehler-Kenngröße zugewiesen werden, welche bei einer Berechnung der Periodendauer und daraus folgend einer Positionsinformation in der ECU berücksichtigt wird. Fig. 8 zeigt als Anwendungsbeispiel die λ - Absolutwertcodierung unterschiedlicher Winkelzonen bzw. unterschiedlicher zusammenhängender Gruppen von Maßstabsteilungen eines Encoders, wie dies z.B. für Motorsteuerungen nützlich ist. Die einzelnen Winkelzonenbereiche bzw. das Durchlaufen der Winkelzonengrenzen sind durch unterschiedliche Maßstabsteilungslängen λ /λmin eineindeutig codiert und durch die zugehörige ω/ωmin - Auswertung direkt drehrichtungsgetreu detektierbar, wobei gleichzeitig und davon unabhängig die Drehzahlmessung über eine Δt -Auswertung vorgenommen werden kann.

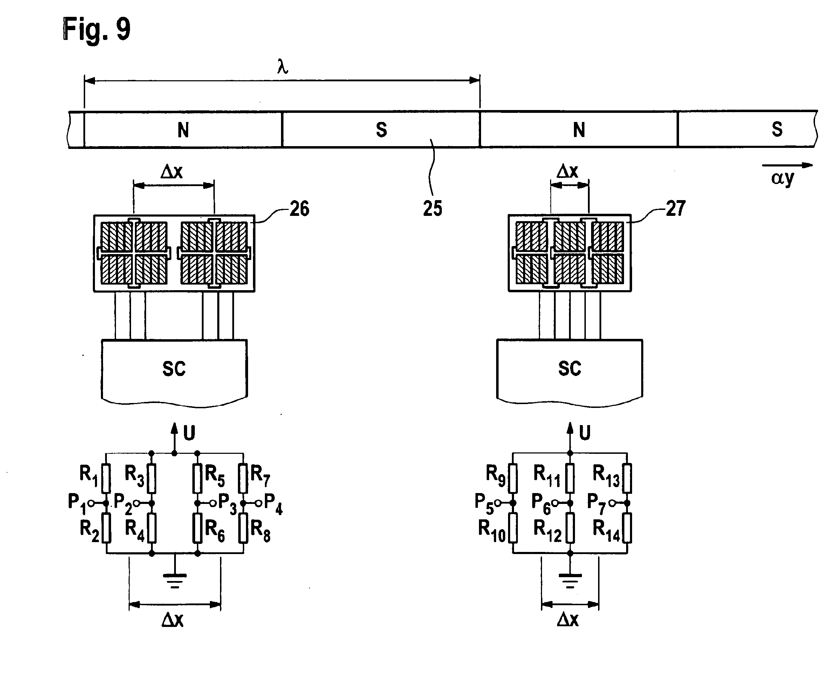

Fig.9 zeigt zwei beispielhafte Ausbildungsformen von Magnetfeldsensorelementen SE1, SE2 auf einem gemeinsamen Chip unter Verwendung magnetoresistiver Strukturen 26, 27 und die Abwicklung eines Encodermaßstabs 25, der sich in Bewegungsrichtung αy relativ zu den ortsfesten Sensorelementstrukturen 26, 27 im Leseabstand bewegt. Die sensorischen Elemente beider Strukturen sind so zueinander angeordnet, dass ihre Lesepunkte in Bewegungsrichtung der Encoderspur um die Ortsdifferenz Δx gegeneinander versetzt angeordnet sind, wobei Δx kleiner als eine N/S-Teilungsperiode bzw. Maßstabsteilungslänge λ des Encoders gewählt ist. Die Struktur 26 besteht aus vier Strängen und wirkt als zwei magnetoresistive (MR) Vollbrücken R1, R2, R3, R4 mit Signalausgängen P1, P2 und R5, R6, R7, R8 mit Signalausgängen P3, P4. Die Lesepunkte der Brücken liegen zwischen den Brückensträngen. Ihre Ortsdifferenz ist identisch mit Δx. Eine alternative beispielhafte Ausführungsform ist die Struktur 27 mit drei Strängen, die als zwei MR-Vollbrücken R9, R10, R11, R12 mit Signalausgängen P5, P6 und R11, R12, R13, R14 mit Signalausgängen P6, P7 betrieben wird, welche über den mittleren Strang R11, R12 und den Signalausgang P6 miteinander verkoppelt sind. Wie zuvor beschrieben liegen die Lesepunkte der Brücken zwischen den Brückensträngen. Ihre Ortsdifferenz Δx lässt sich bei dieser Version kleiner gestalten als bei der Vier-Strang-Version. Beispielgemäß sind in Serie geschaltete MR-Streifenwiderstände der Brückenelemente R1 bis R8 bzw. R9 bis R14 entweder als örtlich voneinander abgegrenzte Widerstandsmäander ausgebildet oder bei Bedarf flächenartig örtlich ineinander zu verschachtelt. Alternativ beispielhaft sind diese MR-Streifenwiderstände je nach Anwendungsbedarf mit oder ohne überlagerte Barberpole-Struktur ausgebildet.

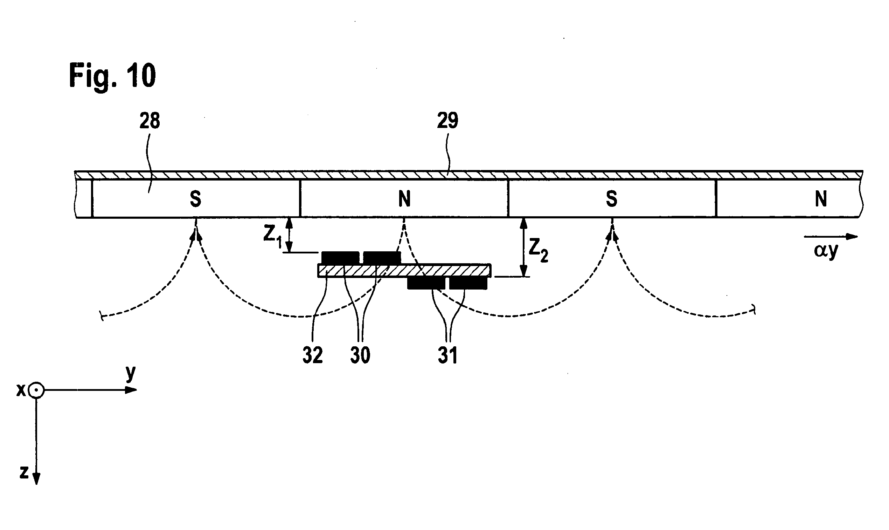

Fig.10 zeigt ein Ausführungsbeispiel von zwei gegenüber dem Maßstab des Encoders mit unterschiedlichem Abstand angeordneten Magnetfeldsensorelementen 30,31 unter der Maßgabe einer Realisierung mit Brückenstrukturen gemäß Fig. 9. Struktur 26, hier als Seitenansicht symbolisiert, ist durch je zwei Brückenstränge 30, 31, auf Basis von AMR-Elementen (Anisotrop Magnetoresistiv) zum Betrieb zweier sensorischer Pfade mit unterschiedlichen Luftspalten Z1, Z2 gegenüber Encoder 28 ausgebildet und angeordnet, wobei Encoder 28 beispielgemäß zusätzlich mit einem Eisenrückschluß 29 ausgebildet ist. Die Brückenstrukturen sind auf einen Träger 32 aufgebracht. Die Differenz der Luftspaltabstände (Z2-Z1) ist stets so gewählt, dass eine magnetische Übersteuerung des zu Z2 gehörigen sensorischen Kanals ausgeschlossen ist, wenn Z1 >= 0,5 mm gewählt wird.

## Patentansprüche

1. Sensoranordnung zur präzisen Erfassung von Relativbewegungen zwischen einem Encoder und einem Sensor umfassend einen Encoder (7,28), der einen inkrementellen Maßstab (23,24,25) mit mehreren Maßstabsteilungen (λ) aufweist, und einen Sensor (8), welcher über einen Luftspalt magnetisch mit dem Encoder (7,28) gekoppelt ist und wenigstens zwei Magnetfeldsensorelemente (SE1, SE2) umfasst, die in Richtung der Relativbewegung um einen definierten Abstand (Δx) zueinander versetzt angeordnet sind, wobei die Magnetfeldsensorelement-Ausgangssignale (V₁, V₂) bezüglich des Erfassens einer Maßstabsteilung (λ) oder eines definierten Anteils einer Maßstabsteilung (N,S) um eine relativgeschwindigkeitsabhängige Zeitdifferenz relativ zueinander verschoben sind, wobei der Sensor (8) eine Signalverarbeitungsschaltung (40) aufweist, welche ein Schnittstellenmodul (33) umfasst, das dazu eingerichtet ist, ein Sensorausgangssignal (I_{S3},I_{S4}) umfassend zumindest ein Geschwindigkeitssignal in Abhängigkeit dieser Zeitdifferenz zu erzeugen, **dadurch gekennzeichnet, dass**
die Signalverarbeitungsschaltung (40) eine Signalaufbereitungseinheit (10) umfasst, die dazu eingerichtet ist, aus den Magnetfeldsensorelement-Ausgangssignalen (V₁,V₂) zumindest jeweils ein Bewegungssignal zu erzeugen, wobei das Schnittstellenmodul (33) einen Modulator (15) und zumindest eine Stromquelle (19) umfasst, wobei der Modulator (15), der dazu eingerichtet ist, wenigstens in Abhängigkeit der Bewegungssignale die mindestens eine Stromquelle (19) anzusteuern und das Sensorausgangssignal (I_{S3},I_{S4}) als im Wesentlichen periodisches, eingeprägtes Stromsignal zu erzeugen, welches pro Signalperiode zwei Zählimpulse (20,21) aufweist, die insbesondere jeweils in einer Zählimpulseinheit (11) aus den Bewegungssignalen erzeugt werden, und deren zeitlicher Versatz (Δt) von aufsteigender Flanke des ersten Zählimpulses (20) zu aufsteigender Flanke des zweiten Zählimpulses (21) von der relativgeschwindigkeitsabhängigen Zeitdifferenz der Magnetfeldsensorelement-Ausgangssignale (V₁,V₂) abhängt, wobei die Signalverarbeitungsschaltung (40) eine Bewegungsrichtungseinheit (16) aufweist, die dazu eingerichtet ist, in Abhängigkeit einer durch die Signalaufbereitungseinheit (10) bereitgestellten Bewegungsrichtungsinformation den Modulator (15) des Schnittstellenmoduls (33) so anzusteuern, dass unabhängig von der Bewegungsrichtung des Encoders (7,28) und unabhängig von der **dadurch** erzeugten Reihenfolge der beiden Zählimpulse, generiert aus den Magnetfeldsensorelement-Ausgangssignalen (V₁,V₂), das in einer Zusatzinformationseinheit (12) aus wenigstens einer Zusatzinformation erzeugte Zusatzinformationssignal (22) stets in einem definierten zeitlichen Abstand dem zweiten, nacheilenden Zählimpuls (21) folgt.

2. Sensoranordnung gemäß Anspruch 1, **dadurch gekennzeichnet, dass** der inkrementelle Maßstab (23,25) des Encoders (7,28) zumindest eine Maßstabsteilung mit definierter Länge zur Codierung einer Positionsinformation aufweist, wobei sich diese definierte Länge von der Länge anderer Maßstabsteilungen des Encoders unterscheidet.

3. Sensoranordnung nach Anspruch 1 oder 2, **dadurch gekennzeichnet, dass** diese über zumindest zwei Leitungen mit einer elektronischen Kontrolleinheit (ECU) (9) verbunden ist und insbesondere über diese beiden Leitungen mit elektrischer Energie versorgt wird.

4. Sensoranordnung nach mindestens einem der Ansprüche 1 bis 3, **dadurch gekennzeichnet, dass** die Längen der Maßstabsteilungen (λ) ortsabhängig unterschiedlich, insbesondere eindeutig unterschiedlich, entlang der Relativbewegungsrichtung ausgebildet sind.

5. Sensoranordnung nach mindestens einem der Ansprüche 1 bis 4, **dadurch gekennzeichnet dass** die Signalaufbereitungseinheit (10), die dazu eingerichtet ist, zumindest eine der folgenden Zusatzinformationen aus mindestens einem der Magnetfeldsensorelement-Ausgangssignale (V₁,V₂) zu generieren und zur weiteren Verarbeitung bereitzustellen:
- eine Bewegungsrichtungsinformation,
- eine Information über die magnetische Feldstärke im Luftspalt und/oder
- einen Eigendiagnoseparameter.

6. Sensoranordnung nach mindestens einem der Ansprüche 1 bis 5, **dadurch gekennzeichnet, dass** das Schnittstellenmodul (33) das Sensorausgangssignal (I_{S3},I_{S4}), das dazu eingerichtet ist, zusätzlich in Abhängigkeit zumindest einer Zusatzinformation zu erzeugen, wobei pro Signalperiode in der Pulspause zwischen dem einzelnen Zählimpuls (35) und dem Zählimpuls der darauf folgenden Signalperiode oder in der Pulspause zwischen dem zweiten Zählimpuls (21) und dem ersten Zählimpuls der darauf folgenden Signalperiode zu definierten Zeitpunkten Zusatzinformationsimpulse (22) definierter Zeitdauer oder Zusatzinformationsimpulspausen definierter Zeitdauer, in Abhängigkeit des binären Wertes der Zusatzinformation, erzeugt werden, wobei die Amplitude der Zusatzinformationsimpulse sich insbesondere von der Amplitude der Zählimpulse (20,21,35) unterscheidet.

7. Sensoranordnung nach mindestens einem der Ansprüche 1 bis 6, **dadurch gekennzeichnet, dass** die wenigstens zwei Magnetfeldsensorelemente (SE1, SE2) Anisotrop-Magneto-Resistive-Sensorelemente sind und der Sensor (8) zusätzlich mindestens einen Biasmagneten aufweist und dass in Bezug auf ein räumliches, kartesisches Koordinatensystem (x,y,z) der Encoder (7,28) bezüglich seiner durch den Sensor (8) erfassten Maßstabsfläche im Wesentlichen parallel zur x-y-Ebene, der Biasmagnet bezüglich seiner Magnetisierungsrichtung im Wesentlichen parallel zur x-Achse und die Magnetfeldsensorelemente (30,31) bezüglich ihrer jeweiligen Sensorfläche im Wesentlichen parallel zur x-y-Ebene angeordnet sind, wobei die Magnetfeldsensorelemente (30,31) mit einer in z-Richtung unterschiedlichen Beabstandung zur Maßstabsoberfläche angeordnet sind.

8. Verfahren zur präzisen Erfassung von Relativbewegungen zwischen einem Encoder und einem Sensor in einer Sensoranordnung umfassend einen Encoder (7,28), der einen inkrementellen Maßstab (23,24,25) mit mehreren Maßstabsteilungen (λ) aufweist, und einen Sensor (8), welcher über einen Luftspalt magnetisch mit dem Encoder (7,28) gekoppelt ist und wenigstens zwei Magnetfeldsensorelemente umfasst (SE1,SE2), die in relativer Bewegungsrichtung des Encoders um einen definierten Abstand (Δx) zueinander versetzt angeordnet sind, wobei die Magnetfeldsensorelement-Ausgangssignale (V₁,V₂) bezüglich des Erfassens einer Maßstabsteilung (λ) oder eines definierten Anteils einer Maßstabsteilung (N,S) um eine relativgeschwindigkeitsabhängige Zeitdifferenz relativ zueinander verschoben sind, wobei aus diesen beiden Magnetfeldsensorelement-Ausgangssignalen (V₁,V₂) in Abhängigkeit dieser Zeitdifferenz ein einzelnes Sensorausgangssignal (I_{S3},I_{S4}) umfassend ein Geschwindigkeitssignalmuster mittels einer Signalverarbeitungsschaltung (40) erzeugt wird, wobei die Erzeugung des Geschwindigkeitssignalmusters für jeweils eine Signalperiode **dadurch gekennzeichnet ist, dass** beim bezüglich der relativgeschwindigkeitsabhängigen Zeitdifferenz direkt aufeinander folgenden Über- und Unterschreiten einer ersten (V_{T}) und einer zweiten (-V_{T}) definierten Amplitudenschwelle durch jeweils eines der Magnetfeldsensorelement-Ausgangssignale (V₁,V₂) ein erster (20) und ein nacheilender, zweiter (21) Zählimpuls jeweils mit definierter Amplitude und mit einer definierten Dauer durch die Signalverarbeitungsschaltung (40) erzeugt wird, wobei in der Signalverarbeitungsschaltung (40) aus zumindest einem der Magnetfeldsensorelement-Ausgangssignale (V₁,V₂) Zusatzinformationen gewonnen werden, die als wenigstens ein Zusatzinformationsbit codiert werden, wobei jeweils einmal pro Signalperiode diese Zusatzinformationsbits in einer Pulspause nach dem nacheilenden, zweiten Zählimpuls (21) codiert werden.

9. Verfahren nach Anspruch 8, **dadurch gekennzeichnet, dass** das Sensorausgangssignal (I_{S3},I_{S4}) in Form eines eingeprägten Stromsignals an eine elektronische Kontrolleinheit (ECU) (9) übertragen wird, mit welcher der Sensor (8) über zumindest zwei Leitungen verbunden ist.

10. Verfahren nach Anspruch 8 oder 9, **dadurch gekennzeichnet, dass** die Zusatzinformationsbits in Form von aufeinanderfolgenden Zusatzinformationsimpulsen (22) mit einer definierten zweiten Amplitude und einer definierten Zeitdauer oder in Form von entsprechenden Zusatzinformationsimpulspausen codiert werden.

11. Verfahren nach Anspruch 9 oder 10, **dadurch gekennzeichnet, dass** in der elektronischen Kontrolleinheit (ECU) (9) jeweils pro Signalperiode des Sensorausgangssignals (I_{S3}, I_{S4}) aus dem zeitlichen Versatz (At) zwischen dem ersten (20) und dem nacheilenden, zweiten (21) Zählimpuls oder aus der Zeitdauer (At) des einzelnen Zählimpulses (35) die Relativgeschwindigkeit zwischen Encoder (7,28) und Sensor (8) berechnet wird.

12. Verfahren nach Anspruch 11, **dadurch gekennzeichnet, dass** in der elektronischen Kontrolleinheit (ECU) (9) aus der jeweiligen Periodendauer des Sensorausgangssignals (I_{S3}, I_{S4}) die entsprechende Maßstabsteilung (λ) oder das entsprechende Maßstabsteilungssegment (N,S) des Encoders (7,28), deren oder dessen Erfassung durch den Sensor (8) der jeweiligen Signalperiode zuzuordnen ist, erkannt wird und hieraus insbesondere eine Positionsinformation erzeugt wird.

13. Verfahren nach mindestens einem der Ansprüche 8 bis 12, **dadurch gekennzeichnet, dass** der Sensor (8) die mittlere Magnetfeldstärke im Luftspalt erfasst und diese, insbesondere als Zusatzinformation, an die elektronische Kontrolleinheit (ECU) (9) überträgt, in welcher hiernach der Abbildungsfehler der Maßstabsteilung, mit dem das Sensorausgangssignal (I_{S3},I_{S4}) hinsichtlich einer Periode jeweils behaftet ist, aus der mittleren Magnetfeldstärke im Luftspalt und der Auswertung einer Referenzkennlinie, welche elektronisch gespeichert ist und den Zusammenhang zwischen normierter Luftspaltlänge und Abbildungsfehler und normierter Feldstärke angibt, ermittelt wird, wonach insbesondere die jeweilige Periodendauer des Sensorausgangssignals (I_{S3},I_{S4}) zur Ermittlung und/oder Berechnung einer Positionsinformation unter Berücksichtigung des Abbildungsfehlers ausgewertet wird.

14. Verfahren nach mindestens einem der Ansprüche 8 bis 13, **dadurch gekennzeichnet, dass** die Sensoranordnung (7,8) als Raddrehzahlerfassungssystem ausgebildet ist und in der elektronischen Kontrolleinheit (9) ein Verfahren zur indirekten Reifendruckverlusterkennung durchgeführt wird, welches auf das Sensorausgangssignal (I_{S3},I_{S4}) zurückgreift.

15. Verwendung einer Sensoranordnung gemäß mindestens einem der Ansprüche 1 bis 7 in Kraftfahrzeugen, insbesondere als Raddrehzahlerfassungssystem.

## Claims

1. Sensor arrangement for the precise detection of relative movements between an encoder and a sensor, comprising an encoder (7,28), which has an incremental scale (23,24,25) having a plurality of scale subdivisions (λ), and a sensor (8) which is magnetically coupled to the encoder (7,28) via an air gap and comprises at least two magnetic field sensor elements (SE1, SE2) which are arranged such that they are offset with respect to one another by a defined distance (Δx) in the direction of the relative movement, the magnetic field sensor element output signals (V₁, V₂) having been shifted relative to one another by a relative-speed-dependent time difference with regard to the detection of a scale subdivision (Δ) or a defined part of a scale subdivision (N,S), the sensor (8) having a signal processing circuit (40) which comprises an interface module (33) which is intended to generate a sensor output signal (I_{S3},I_{S4}) comprising at least one speed signal on the basis of this time difference, **characterized in that** the signal processing circuit (40) comprises a signal conditioning unit (10) which is intended to generate at least one respective movement signal from the magnetic field sensor element output signals (V₁,V₂), the interface module (33) comprising a modulator (15) and at least one current source (19), the modulator (15) being intended to drive the at least one current source (19) at least on the basis of the movement signals and to generate the sensor output signal (I_{S3},I_{S4}) in the form of an essentially periodic injected current signal having two counting pulses (20,21) for each signal period, which counting pulses are each generated, in particular, from the movement signals in a counting pulse unit (11) and the temporal offset (Δt) of which, from the rising edge of the first counting pulse (20) to the rising edge of the second counting pulse (21), depends on the relative-speed-dependent time difference between the magnetic field sensor element output signals (V₁,V₂), the signal processing circuit (40) having a movement direction unit (16) which is intended to drive the modulator (15) of the interface module (33) on the basis of movement direction information provided by the signal conditioning unit (10) in such a manner that the additional information signal (22) generated from at least one item of additional information in an additional information unit (12) always follows the second, lagging counting pulse (21) at a defined interval of time irrespective of the direction of movement of the encoder (7,28) and irrespective of the order, which is generated thereby, of the two counting pulses generated from the magnetic field sensor element output signals (V₁,V₂).

2. Sensor arrangement according to Claim 1, **characterized in that** the incremental scale (23,25) of the encoder (7,28) has at least one scale subdivision of a defined length for coding an item of position information, this defined length differing from the length of other scale subdivisions of the encoder.

3. Sensor arrangement according to Claim 1 or 2, **characterized in that** it is connected to an electronic control unit (ECU) (9) by means of at least two lines and, in particular, is supplied with electrical power by means of these two lines.

4. Sensor arrangement according to at least one of Claims 1 to 3, **characterized in that** the lengths of the scale subdivisions (λ) are different depending on the location, in particular are clearly different, in the direction of relative movement.

5. Sensor arrangement according to at least one of Claims 1 to 4, **characterized in that** the signal conditioning unit (10) is intended to generate at least one of the following items of additional information from at least one of the magnetic field sensor element output signals (V₁,V₂) and to provide it for further processing:
- an item of movement direction information,
- an item of information relating to the magnetic field strength in the air gap and/or
- a self-diagnosis parameter.

6. Sensor arrangement according to at least one of Claims 1 to 5, **characterized in that** the interface module (33) additionally generates the sensor output signal (I_{S3},I_{S4}) on the basis of at least one item of additional information, additional information pulses (22) of a defined time duration or additional information pulse pauses of a defined time duration being generated at defined times for each signal period on the basis of the binary value of the additional information in the pulse pause between the individual counting pulse (35) and the counting pulse of the following signal period or in the pulse pause between the second counting pulse (21) and the first counting pulse of the following signal period, the amplitude of the additional information pulses differing from the amplitude of the counting pulses (20,21,35), in particular.

7. Sensor arrangement according to at least one of Claims 1 to 6, **characterized in that** the at least two magnetic field sensor elements (SE1, SE2) are anisotropic magnetoresistive sensor elements and the sensor (8) additionally has at least one bias magnet, and **in that**, with reference to a spatial cartesian coordinate system (x,y,z), that scale area of the encoder (7,28) which is detected by the sensor (8) is arranged essentially parallel to the x-y plane, the magnetization direction of the bias magnet is arranged essentially parallel to the x-axis, and the respective sensor area of the magnetic field sensor elements (30,31) is arranged essentially parallel to the x-y plane, the magnetic field sensor elements (30,31) being arranged at a distance from the scale surface which is different in the z-direction.

8. Method for the precise detection of relative movements between an encoder and a sensor in a sensor arrangement comprising an encoder (7,28), which has an incremental scale (23,24,25) having a plurality of scale subdivisions (λ), and a sensor (8) which is magnetically coupled to the encoder (7,28) via an air gap and comprises at least two magnetic field sensor elements (SE1, SE2) which are arranged such that they are offset with respect to one another by a defined distance (Δx) in the direction of relative movement of the encoder, the magnetic field sensor element output signals (V₁, V₂) having been shifted relative to one another by a relative-speed-dependent time difference with regard to the detection of a scale subdivision (λ) or a defined part of a scale subdivision (N,S), an individual sensor output signal (I_{S3}, I_{S4}) comprising a speed signal pattern being generated from these two magnetic field sensor element output signals (V₁,V₂) on the basis of this time difference using a signal processing circuit (40), the operation of generating the speed signal pattern for a respective signal period being **characterized in that**, when a first defined amplitude threshold (V_{T}) and a second defined amplitude threshold (-V_{T}) are exceeded and undershot in direct succession by a respective one of the magnetic field sensor element output signals (V₁,V₂) with respect to the relative-speed-dependent time difference, a first counting pulse (20) and a lagging, second counting pulse (21) each with a defined amplitude and a defined duration are generated by the signal processing circuit (40), additional information which is coded in the form of at least one additional information bit being obtained from at least one of the magnetic field sensor element output signals (V₁,V₂) in the signal processing circuit (40), these additional information bits being respectively coded, once for each signal period, in a pulse pause following the lagging, second counting pulse (21).

9. Method according to Claim 8, **characterized in that** the sensor output signal (I_{S3},I_{S4}) is transmitted, in the form of an injected current signal, to an electronic control unit (ECU) (9) to which the sensor (8) is connected by means of at least two lines.

10. Method according to Claim 8 or 9, **characterized in that** the additional information bits are coded in the form of successive additional information pulses (22) with a defined second amplitude and a defined time duration or in the form of corresponding additional information pulse pulses.

11. Method according to Claim 9 or 10, **characterized in that** the relative speed between the encoder (7,28) and the sensor (8) is respectively calculated in the electronic control unit (ECU) (9), for each signal period of the sensor output signal (I_{S3}, I_{S4}), from the temporal offset (Δt) between the first counting pulse (20) and the lagging, second counting pulse (21) or from the time duration (Δt) of the individual counting pulse (35).

12. Method according to Claim 11, **characterized in that** the corresponding scale subdivision (λ) or the corresponding scale subdivision segment (N,S) of the encoder (7,28), the detection of which by the sensor (8) can be assigned to the respective signal period, is identified in the electronic control unit (ECU) (9) from the respective period duration of the sensor output signal (I_{S3}, I_{S4}) and is used to generate an item of position information, in particular.

13. Method according to at least one of Claims 8 to 12, **characterized in that** the sensor (8) detects the mean magnetic field strength in the air gap and transmits it, in particular in the form of additional information, to the electronic control unit (ECU) (9) in which the imaging error of the scale subdivision, with which the sensor output signal (I_{S3}, I_{S4}) is respectively encumbered with respect to one period, is then determined from the mean magnetic field strength in the air gap and the evaluation of a reference characteristic curve which is stored electronically and indicates the relationship between the standardized air gap length and the imaging error and the standardized field strength, after which, in particular, the respective period duration of the sensor output signal (I_{S3}, I_{S4}) is evaluated in order to determine and/or calculate an item of position information taking into account the imaging error.

14. Method according to at least one of Claims 8 to 13, **characterized in that** the sensor arrangement (7,8) is in the form of a wheel rotational speed detection system, and a method for indirectly detecting a loss of tire pressure, which has recourse to the sensor output signal (I_{S3}, I_{S4}) , is carried out in the electronic control unit (9).

15. Use of a sensor arrangement according to at least one of Claims 1 to 7 in motor vehicles, in particular as a wheel rotational speed detection system.

## Revendications

1. Arrangement de détection pour la détection précise de mouvements relatifs entre un codeur et un capteur, comprenant un codeur (7, 28) qui présente une échelle incrémentale (23, 24, 25) à plusieurs graduations (λ) et un capteur (8) qui est couplé magnétiquement au codeur (7, 28) par le biais d'un entrefer et qui inclut au moins deux éléments de détection de champ magnétique (SE1, SE2) qui sont disposés avec un décalage d'un écart donné (Δx) l'un de l'autre dans la direction du mouvement relatif, les signaux de sortie d'élément de détection de champ magnétique (V₁, V₂), du point de vue de la détection d'une graduation (λ) ou d'une part définie d'une graduation (N, S), ayant un déphasage mutuel relatif d'une différence de temps qui dépend de la vitesse relative, le capteur (8) présentant un circuit de traitement de signal (40) qui comprend un module d'interface (33), lequel est configuré pour générer un signal de sortie de capteur (I_{S3}, I_{S4}) incluant au moins un signal de vitesse en fonction de cette différence de temps, **caractérisé en ce que** le circuit de traitement de signal (40) inclut une unité de conditionnement de signal (10) qui est configurée pour générer, à partir des signaux de sortie d'élément de détection de champ magnétique (V₁, V₂), au moins un signal de mouvement respectif, le module d'interface (33) incluant un modulateur (15) et au moins une source de courant (19), le modulateur (15) étant configuré pour commander ladite au moins une source de courant (19) au moins en fonction des signaux de déplacement et pour générer le signal de sortie de capteur (I_{S3}, I_{S4}) sous la forme d'un signal de courant à application essentiellement périodique, lequel présente deux impulsions de comptage (20, 21) par période de signal qui sont notamment générées respectivement dans une unité d'impulsion de comptage (11) à partir des signaux de mouvement et dont le décalage dans le temps (Δt) entre le front montant de la première impulsion de comptage (20) et le front montant de la deuxième impulsion de comptage (21) dépend de la différence de temps qui dépend de la vitesse relative entre les signaux de sortie d'élément de détection de champ magnétique (V₁, V₂), le circuit de traitement de signal (40) présentant une unité de direction de mouvement (16) qui est configurée pour commander le modulateur (15) du module d'interface (33) en fonction d'une information de direction de mouvement délivrée par l'unité de conditionnement de signal (10) de telle sorte que, indépendamment de la direction de déplacement du codeur (7, 28) et indépendamment de la séquence ainsi produite des deux impulsions de comptage, générées à partir des signaux de sortie d'élément de détection de champ magnétique (V₁, V₂), le signal d'information supplémentaire (22) généré à partir d'au moins une information supplémentaire dans une unité d'information supplémentaire (12) suit toujours la deuxième impulsion de comptage (21) en retard de phase à un écart dans le temps défini.

2. Arrangement de détection selon la revendication 1, **caractérisé en ce que** l'échelle incrémentale (23, 25) du codeur (7, 28) présente au moins une graduation ayant une longueur définie pour le codage d'une information de position, cette longueur définie étant différente de la longueur d'autres graduations du codeur.

3. Arrangement de détection selon la revendication 1 ou 2, **caractérisé en ce que** celui-ci est relié avec une unité de contrôle électronique (ECU) par le biais d'au moins deux lignes et qu'il est notamment alimenté en énergie électrique par le biais de ces deux lignes.

4. Arrangement de détection selon au moins l'une des revendications 1 à 3, **caractérisé en ce que** les longueurs des graduations (λ) sont différentes en fonction de l'emplacement, notamment explicitement différentes le long de la direction du mouvement relatif.

5. Arrangement de détection selon au moins l'une des revendications 1 à 4, **caractérisé en ce que** l'unité de conditionnement de signal (10) est configurée pour générer au moins l'une des informations supplémentaires suivantes à partir d'au moins l'un des signaux de sortie d'élément de détection de champ magnétique (V₁, V₂) et pour la mettre à disposition en vue de son traitement postérieur :
- une information de direction de mouvement,
- une information sur l'intensité du champ magnétique dans l'entrefer et/ou
- un paramètre autodiagnostic.

6. Arrangement de détection selon au moins l'une des revendications 1 à 5, **caractérisé en ce que** le module d'interface (33) est configuré pour générer le signal de sortie de capteur (I_{S3}, I_{S4}) en plus en fonction d'au moins une information supplémentaire, des impulsions d'information supplémentaire (22) ayant une durée définie ou des pauses d'impulsion d'information supplémentaire ayant une durée définie, en fonction de la valeur binaire de l'information supplémentaire, sont générées à des instants donnés à chaque période de signal dans la pause d'impulsion entre l'impulsion de comptage (35) individuelle et l'impulsion de comptage de la période de signal qui suit ou dans la pause d'impulsion entre la deuxième impulsion de comptage (21) et la première impulsion de comptage de la période de signal qui suit, l'amplitude des impulsions d'information supplémentaire étant notamment différente de l'amplitude des impulsions de comptage (20, 21, 35).

7. Arrangement de détection selon au moins l'une des revendications 1 à 6, **caractérisé en ce que** les au moins deux éléments de détection de champ magnétique (SE1, SE2) sont des éléments de détection magnétorésistifs anisotropes et le capteur (8) présente en plus au moins un aimant de polarisation et que, en référence à un système de coordonnées cartésien dans l'espace (x, y, z), la surface de graduation du codeur (7, 28) détectée par le capteur (8) est disposée pour l'essentiel parallèlement au plan x-y, le sens de magnétisation de l'aimant de polarisation est disposé pour l'essentiel parallèlement à l'axe x et la surface de détection des éléments de détection de champ magnétique (30, 31) est disposée pour l'essentiel parallèlement au plan x-y, les éléments de détection de champ magnétique (30, 31) étant disposés à un écart différent dans la direction z de la surface de graduation.

8. Procédé de détection précise de mouvements relatifs entre un codeur et un capteur dans un arrangement de détection comprenant un codeur (7, 28) qui présente une échelle incrémentale (23, 24, 25) à plusieurs graduations (λ) et un capteur (8) qui est couplé magnétiquement au codeur (7, 28) par le biais d'un entrefer et qui inclut au moins deux éléments de détection de champ magnétique (SE1, SE2) qui sont disposés avec un décalage d'un écart donné (Δx) l'un de l'autre dans la direction du mouvement relatif du codeur, les signaux de sortie d'élément de détection de champ magnétique (V₁, V₂), du point de vue de la détection d'une graduation (λ) ou d'une part définie d'une graduation (N, S), ayant un déphasage mutuel relatif d'une différence de temps qui dépend de la vitesse relative, un signal de sortie de capteur (I_{S3}, I_{S4}) individuel incluant un modèle de signal de vitesse étant généré au moyen d'un circuit de traitement de signal (40) à partir de ces deux signaux de sortie d'élément de détection de champ magnétique (V₁, V₂) en fonction de cette différence de temps, la génération du modèle de signal de vitesse à chaque fois pour une période de signal étant **caractérisée en ce que** dans le cas d'un franchissement vers le haut ou vers le bas, successif direct en rapport avec la différence de temps qui dépend de la vitesse relative, par l'un des signaux de sortie d'élément de détection de champ magnétique (V₁, V₂) d'un premier (V_{T}) et d'un deuxième (-V_{T}) seuil d'amplitude défini, une première (20) et une deuxième (21) impulsion de comptage en retard de phase sont respectivement générées avec une amplitude définie et avec une durée définie par le circuit de traitement de signal (40), des informations supplémentaires étant obtenues dans le circuit de traitement de signal (40) à partir d'au moins l'un des signaux de sortie d'élément de détection de champ magnétique (V₁, V₂), lesquelles sont codées sous la forme d'au moins un bit d'information supplémentaire, ces bits d'information supplémentaire étant respectivement codés une fois par période de signal dans une pause d'impulsion après la deuxième impulsion de comptage (21) en retard de phase.

9. Procédé selon la revendication 8, **caractérisé en ce que** le signal de sortie de capteur (I_{S3}, I_{S4}) est transmis sous la forme d'un signal de courant appliqué à une unité de contrôle électronique (ECU) (9) avec laquelle le capteur (8) est relié par le biais d'au moins deux lignes.

10. Procédé selon la revendication 8 ou 9, **caractérisé en ce que** les bits d'information supplémentaire sont codés sous la forme d'impulsions d'information supplémentaire (22) successives avec une deuxième amplitude définie et une durée définie ou sous la forme de pauses d'impulsion d'information supplémentaire correspondantes.

11. Procédé selon la revendication 9 ou 10, **caractérisé en ce que** la vitesse relative entre le codeur (7, 28) et le capteur (8) est calculée dans l'unité de contrôle électronique (ECU) (9) à chaque fois par période de signal du signal de sortie de capteur (I_{S3}, I_{S4}) à partir du décalage dans le temps (Δt) entre la première (20) et la deuxième impulsion de comptage (21) en retard de phase ou à partir de la durée (Δt) de l'impulsion de comptage (35) individuelle.

12. Procédé selon la revendication 11, **caractérisé en ce que** la graduation (λ) correspondante ou le segment de graduation (N, S) correspondant, dont la détection par le capteur (8) est à associer à la période de signal respective, est détectée dans l'unité de contrôle électronique (ECU) (9) à partir de la durée de période respective du signal de sortie de capteur (I_{S3}, I_{S4}) et une information de position est notamment générée à partir de celle-ci.

13. Procédé selon au moins l'une des revendications 8 à 12, **caractérisé en ce que** le capteur (8) détecte l'intensité de champ magnétique moyenne dans l'entrefer et transmet celle-ci, notamment sous la forme d'une information supplémentaire, à l'unité de contrôle électronique (ECU) (9) dans laquelle est ensuite déterminée l'erreur de représentation de la graduation, qui affecte à chaque fois une période du signal de sortie de capteur (I_{S3}, I_{S4}), à partir de l'intensité de champ magnétique moyenne dans l'entrefer et de l'interprétation d'une courbe caractéristique de référence qui est enregistrée électroniquement et qui indique la relation entre la longueur d'entrefer normalisée et l'erreur de représentation et les intensités de champ normalisées, après quoi la durée de période correspondante du signal de sortie de capteur (I_{S3}, I_{S4}) est notamment interprétée afin de déterminer et/ou de calculer une information de position en tenant compte de l'erreur de représentation.

14. Procédé selon au moins l'une des revendications 8 à 13, **caractérisé en ce que** l'arrangement de détection (7, 8) est réalisé sous la forme d'un système de détection de la vitesse de rotation des roues et dans l'unité de contrôle électronique (9) est mis en oeuvre un procédé de détection indirecte de la perte de pression de pneumatique, lequel fait appel au signal de sortie de capteur (I_{S3}, I_{S4}).

15. Utilisation d'un arrangement de détection selon au moins l'une des revendications 1 à 7 dans des véhicules automobiles, notamment en tant que système de détection de la vitesse de rotation des roues.
